# EUROPEAN PATENT APPLICATION

(11) **EP 4 760 428 A1**
(43) Date of publication of application: **17.06.2026**
(21) Application number: 24220269.5
(22) Date of filing: 16.12.2024
(51) Int. Cl.: G05B 23/02

(54) **METHOD FOR PROVIDING A PLANT OPERATION SUPPORT SYSTEM**

(71) Applicant: ABB SCHWEIZ AG, 5400 Baden (CH)
(72) Inventor: LINSBAUER, Lukas, 69221 Dossenheim (DE); HOERNICKE, Mario, 76829 Landau (DE); STARK, Katharina, 69469 Weinheim (DE); GRUENER, Sten, 69514 Laudenbach (DE); BECKER, Pascal, 76676 Graben-Neudorf (DE); THODE, Sara Emilie, 0661 Oslo (NO); SCHOCH, Nicolai, 69120 Heidelberg (DE); BRAUN, Roland, 53859 Niederkassel Lülsdorf (DE); ESKANDANI, Nafise, 64380 Rossdorf (DE); KOTRIWALA, Arzam Muzaffar, 68526 Ladenburg (DE)
(74) Representative: Maiwald GmbH

(57) **Abstract**

The computer-implemented method for providing a plant operation support system includes obtaining a plant model that models the operation of a plant. It involves simulating, by means of the plant model, different possible futures of a plant state at a time starting from an initial simulation plant state at an initial time, where each possible future of a plant state corresponds to an adjustment action among a plurality of potential adjustment actions and/or a fault source among a plurality of potential fault sources associated with an alarm and/or an unexpected plant behaviour. The method further includes analysing and scoring, by means of an exploratory method, the possible futures of a plant state to obtain, for the possible futures of a plant state, a respective benefit score of the corresponding potential adjustment action and/or a respective likelihood score of the corresponding potential fault source. It determines at least one of the following: one or more proposed adjustment actions among the plurality of potential adjustment actions based on the benefit score of the corresponding potential adjustment action; a ranking of adjustment actions among the plurality of potential adjustment actions in terms of their outcome based on the benefit score of the corresponding potential adjustment action; a proposed fault source among the plurality of potential fault sources, wherein the proposed fault source is predicted to be a root-cause of and/or to contribute to the alarm and/or the unexpected plant behaviour based on the likelihood score of the corresponding potential fault source; a ranking of fault sources among the plurality of potential fault sources in terms of their outcome based on the likelihood score of the corresponding potential fault source.

## Description

### FIELD OF THE INVENTION

The invention pertains to a method for providing a plant operation support system, a system, a computer-readable medium and a computer program product.

### BACKGROUND

In the field of industrial plant operations, it is common to encounter complex systems that require continuous monitoring and adjustment to maintain optimal performance. Known systems typically involve manual intervention by operators who rely on their expertise and experience to make decisions regarding adjustments and fault diagnosis. These systems often use static models or historical data to predict plant behaviour and suggest corrective actions. However, these approaches can be limited in their ability to adapt to dynamic changes in plant conditions and may not provide timely or accurate recommendations for adjustments or fault identification.

According to known methods, plant operation support systems often rely on predefined rules and thresholds to trigger alarms and then start suggesting corrective actions. These systems may not account for the variability and uncertainty inherent in plant operations, leading to suboptimal performance and increased downtime. Additionally, the process of fault diagnosis can be time-consuming and prone to errors, as it typically involves manual inspection and analysis of plant data. The lack of real-time, predictive capabilities in existing systems further exacerbates these challenges, making it difficult for operators to respond effectively to unexpected plant behaviour.

Despite the substantial advances in the field of plant operation support systems, a need for more sophisticated methods that can provide real-time, predictive insights into plant behaviour remains. Such methods should be capable of analysing the outcomes of adjustment actions, and/or identifying potential fault sources. By leveraging advanced modelling and simulation techniques, these systems can offer more precise and timely recommendations, ultimately improving plant performance and reducing downtime.

Especially lately, due to advances in neural networks and growing computation power and speed, the application of neural networks or model predictive control are leveraged in many technology fields. Though, the field of plant control demands very high security standards und underlies documentation regulations. For this reason, the use of said solutions is not applicable for a support system that requires a traceable and documented suggestion finding, where an operator or supervisor has to be able to track-back each step of the decision making which ultimately led to final decision.

It is therefore a technical problem underlying the present invention to provide a plant operation support system that at least partially overcomes the disadvantages of known systems.

### SUMMARY

The object is achieved by the present invention. The invention provides a method, system, computer program product, and computer-readable medium according to the independent claims, which overcome one or more of the above-mentioned problems of the prior art. Preferred embodiments are laid down in the dependent claims.

The computer-implemented method for providing a plant operation support system includes obtaining a plant model that models the operation of a plant. It involves simulating, by means of the plant model, different possible futures of a plant state at a time starting from an initial simulation plant state at an initial time, where each possible future of a plant state corresponds to an adjustment action among a plurality of potential adjustment actions and/or a fault source among a plurality of potential fault sources associated with an alarm and/or an unexpected plant behaviour. The method further includes analysing and scoring, by means of an exploratory method, the possible futures of a plant state to obtain, for the possible futures of a plant state, a respective benefit score of the corresponding potential adjustment action and/or a respective likelihood score of the corresponding potential fault source. It determines at least one of the following: one or more proposed adjustment actions among the plurality of potential adjustment actions based on the benefit score of the corresponding potential adjustment action; a ranking of adjustment actions among the plurality of potential adjustment actions in terms of their outcome based on the benefit score of the corresponding potential adjustment action; a proposed fault source among the plurality of potential fault sources, wherein the proposed fault source is predicted to be a root-cause of and/or to contribute to the alarm and/or the unexpected plant behaviour based on the likelihood score of the corresponding potential fault source; a ranking of fault sources among the plurality of potential fault sources in terms of their outcome based on the likelihood score of the corresponding potential fault source.

In other words, a model of the plant is presented that illustrates the components of the plant, but also controls and fundamentals and correlations of the process that are running in the actual plant. Based on this knowledge, and on the fact that the simulations for at least one next future state can be made faster than the equivalent actual plant takes to actually arrive at a state in the future, the model can simulate different futures of the plant. This is done by starting from an initial state. This initial state can be in the present or in the past.

According to the present disclosure, the future of a plant state may refer to an operational state of the plant in a certain time in the future (e.g. what will have changed in 1 minute opening valve A?).

The different possible futures (of plant states) may all be simulated for a same time in the future (e.g. 30 seconds, 1 minute, 20 minutes).

The time frame that is selected for determining the next state in a future XX minutes from an initial state, may be dependent on the rate at which processes are happening in the plant.

In one aspect, possible adjustment actions may be determined. Based on the initial state, the plant model is then altered, e.g. by selecting one adjustment action, aiming to achieve a certain goal (e.g. higher production output). The future of the plant state model is simulated resulting in an outcome that may illustrate the result that could be achieved by taking the selected adjustment actions.

As the plant state model offers multiple different adjustment actions, different futures with different adjustment actions may be created, each starting from the initial state (e.g. what will have changed in 1 minute after closing valve B?).

In another aspect, it is also possible that an alarm and/or an unexpected plant behaviour was detected (e.g. overpressure). In this case, the model may be used to simulate, from an initial state, different futures of different applied fault sources.

In this regard, an alarm may be raised by the plant and is as such easy to detect. Though, the cause of the alert may be found by this aspect. Unexpected behaviour refers to an anomaly in the plant operation. This unexpected behaviour cannot be detected easily, as it may not necessarily trigger an alert (e.g., slower filling up of a vessel could be caused, among other things, by a leaking pipe and/or a faulty valve). Hence, the detection of an unexpected behaviour, offered by this embodiment, solves a non-trivial problem.

In a next step, the different futures (of the adjustment actions and/or fault sources) may be analysed and ranked. For example, if the simulation result achieved with an adjustment action improved the desired goal (e.g. higher production output), it may be awarded more points.

Points that may be awarded to an adjustment action, or respectively a fault source, may represent the benefit score, or respectively the likelihood score. The benefit score may follow the idea of the better the improvement, the higher the awarded benefit score.

Analogous to that, the futures of the different fault sources may be analysed and ranked.

If the simulation result achieved a fault source that is closer to the detected error, it is awarded more points. The likelihood score may follow the idea of the closer the simulation result is matching with the actual problem (alarm or unexpected behaviour), the higher the awarded likelihood score.

Based on the benefit score or likelihood score, the best adjustment action or most likely fault source can be derived.

Further, the point system also allows ranking the best results. E.g. if there are three top results with similar points, they might result in similar beneficial results or respectively might be similarly likely to be root cause of the problem. If a single result has by far the most points, it may be most likely that it is by far the best solution or respectively most certainly the reason for the problem (alarm or unexpected behaviour).

This method enables improved decision making, enables the operator to perform informed decision making in the event of an alarm, and offers the early detection of an unexpected plant behaviour, due to a deviation between the simulated target and real performance. This improves the overall plant operation efficiency and chances of bad decision making and improves the faulty component detection, thereby reducing downtime and timeframes of sub-optimal production.

According to the present disclosure, the plant can be any kind of plant, e.g. an industrial plant such as a power plant (e.g. combined heat and power plant) or a production plant (e.g. large-scale bakery, glass bottle production).

According to the present disclosure, plant operation support refers to any measures that support a user that is in charge of ensuring plant operation, such as a plant operator. Said support may be provided by presenting at least one preferable option to enable informed decision-making of the user (e.g., the plant operator or supervisor) and, alternatively or additionally, holding back disadvantageous options to avoid counterproductive outcomes. Further, the user may also receive support for the possible event of an alarm situation and/or unexpected plant behavior, by receiving guidance for handling the problem and/or identifying the source of an alarm and/or of an error.

According to the present disclosure, the plant model which is modelling the plant operation of a plant refers to a model of the plant that reflects the information about the plant on a plant component level, such as sensors (e.g. for measuring pressure, flow, or temperature), actors (e.g. valves, heaters, or belt drives), but also contains the information of the underlying dependency of the different components (e.g. connections of pipes and the valves therein, or a mass flow sensor and the pipe diameter at its location), and a detailed overview of the processes and sequences within the operational plant (e.g. which educts are reaction to form a product, what is the reaction speed, or how is temperature/pressure affecting the product output flow), and constraints of the processes (e.g. minimum temperature for a production process, maximum holding times between two production steps) and limits of safe operation (e.g. pressure or temperature limits). Hence, the plant model may be seen as providing information that can allow for modelling the physical state (e.g. process such as material flow or reaction time, or cycle times for transportation) and operation states (e.g. controls such as available valves and heating or cooling sources, the current state of the plant components, or possible adjustment possibilities (such as possible steps) for plant components) of the plant. The plant model may be derived from the initial plans that were used for planning the plant. A further option of arriving at a plant model may be to create the plant model by employing an algorithm that analyses the plants operational behaviour during a runtime for a certain amount of time and creates a plant model based on the analysing results.

An accurate plant model allows for simulating the plant may starts at a certain point where a current state of the actual plant is fed into the simulation, and then the simulation can run independently from the live feedback of the power plant.

The simulation of the plant may nevertheless highly accurately reflect the actual plant's behaviour. The required simulation time progresses may be much faster than real time. Consequently, e.g. within seconds of real time, many minutes or even hours of simulation time might be computed for multiple alternative futures of the plant in order to determine the best future (the simulated future with the most beneficial outcome) or to determine the most likely fault source (the simulated future with a fault source that matches best with the an alarm and/or an unexpected plant behaviour of the actual plant).

As each component of the plant cannot be perfectly represented in a simulation (first, even if the simulation model would be perfect, the actual component may not behave ideally, and second, it may be impossible to perfectly simulated the complex and non-ideal behaving system of a plant), the simulated system of a plant, containing many components, may naturally be underlying a small deviation compared to the actual plant. Over time, this deviation might grow. A repeatedly executed (e.g. a cyclic, on demand, a certain time that is dependent to a current throughput compared to a maximum throughput of the plant) alignment process between the actual plant state and the simulation may be performed after a multitude of minutes to multiple hours. The gradual deviation between the simulated plant model and the actual plant model is, under normal operation, growing only gradually and at a reproduceable rate. Accordingly, the simulation may be running independently from the actual plant, allowing improved simulation capabilities (e.g. more degrees of freedom, or longer simulation times), but to also check if the simulation is still in line with the actual plant's behaviour (e.g. for reliable simulation results, or detection of unexpected plant behaviour).

According to the present disclosure, the initial simulation plant state may refer to an initial/current state (t) of the simulation. Starting from this state, the next future (t+1) is simulated. If a future of said future is to be simulated (t+2), the initial state will be set to said future (t+1). Hence, the simulation can also run in a recursive manner, to also simulate the future of a future (e.g. first future in 1 minute, next future in 2 minutes and so forth). The number of recursive loops could be predefined (esp. by setting a maximum value), could be defined by a time criterium, or by setting a criterium of certainty of the conclusion/outcome (e.g. demanding at least one result above a threshold of a certain minimum score).

According to the present disclosure, the term actual plant refers to the real plant, in contrast to the simulated plant.

The simulating different possible futures of a plant state, by means of the plant model, is then performed based on the physical and the operational state derived of the plant model.

According to the present disclosure, an adjustment action may refer to an adjustment action of the plant that are directly adjustable (e.g. the power of a heater can be directly adjusted) or indirectly adjustable (e.g. the current setting of a valve has to be adjusted by an actuator).

According to the present disclosure, a fault source may refer to a component (or more) that is the cause of an alarm and/or an unexpected plant behaviour.

According to the present disclosure, an alarm may refer to an alarm that is issued by the actual plant. The criteria when such an alarm is to be issued relates to general rules that have to be met to ensure safe plant operation. Further alarm conditions may be set to detect severe maloperation, such as a significant drop of production outcome or abnormally high use of certain educts. Upon an alarm being issued, this may be reported to the simulation model, independent of the cyclic alignment process.

In systems where the plant operation support is continuously running (processes may be only set up once, and usually do not require adaptions, e.g. in a bottling plant), and user inputs are only made based on recommendations, upcoming alarms are ideally only based on errors (e.g. error in the plant operation support software or technical errors with the plant). Though, in the event of employing the plant operation support in a non-continuous manner (process is regularly adapted during operation, e.g. winders for the production of cables or pipelines), an alarm could also be subjected to a counter constructive user input. In those specific cases, one approach could also lie in not only trying to identify the potential fault source, but in parallel, to also set quickly arriving at a previous safe operation point as new goal. Arriving at a previous safe operation point would be addressed by finding an appropriate adjustment action(s).

It shall be noted that, the input of a user (e.g. operator or supervisor) may also be a potential fault source if the user's input causes a counterproductive behaviour of the plant (in respect to the current goal). A further fault source that may be taken into consideration is the plant operation support system itself, which is also just based on programming code and hence, can naturally contain erroneous code causing an unwanted behaviour, such as making wrong suggestions. Hence, the plant operation support system itself may be also taken into account as a fault source.

According to the present disclosure, unexpected plant behaviour may refer to the plant behaving differently than it is specified and reflected in the simulation model (this may be detected by exceeding a threshold). This may be the case if a plant component in the plant is broken (e.g. a broken actor of a valve or a heater subjected to reduced power), as the same plant component in the simulation model would still be simulated as operational and thus would lead to a differentiating outcome in simulation compared to the actual plant. Upon comparing the actual plant state to the simulated plant state, this deviation caused by an unexpected behaviour is likely to be detectable. The deviation might be e.g. slow and gradual if it is growing continuous and at an almost linear rate. The deviation could also be abrupt, e.g. if the power supply of a sensor is breaking down. Another aspect could also be that any of the simulated futures show an unexpected plant behaviour. In those cases, the taken actions (or the lack of taken actions) leading to such a simulated future illustrate an undesirable outcome.

According to the present disclosure, the exploratory method may refer to a method that examines each of the futures for their outcome. This can especially also happen in a recursive manner, e.g. simulating a certain future, and after analysing said future, simulating the future of said future. Exploratory methods can be tree search algorithms, such as for example, but not limited to, Monte Carlo tree search algorithms. As the exploratory method is sampling a subset of all the possible futures, it could also be regarded as "sampling method".

According to the present disclosure, the exploratory method may offer a way of making decisions based on (randomized) explorations of the search space (the simulated futures). Such an exploratory method may operate effectively without any knowledge in the particular domain, apart from knowing certain rules and end conditions. The exploratory method does not rely on previous decision making (no memory). As plants might be subjected to security and safety requirements, the exploratory method may provide a model that poses fully explainable and retraceable decision making, that may be logged, and, if needed, might allow to be reconstructed by a human to understand why certain decisions were chosen by the exploratory model. This can for example enable the possibility of proofing if an error was caused by the software for the mere reason of insufficient programming rules or had external reasons lying beyond the plant operation support system. Thus, the model may be what experts refers to as "white box" and explainable. This allows arriving at a plant operation support system that presents an explainable and recurring outcome for a same problem.

Optionally, the plant model itself could be "black box" (programming that is non-visible to any user, e.g., obfuscated models) and does not need to be white box. This does e.g., allow the usage of proprietary closed source models in cases where vendors do not want to disclose their intellectual property. Though, the simulation model (that is potentially using a black box plant model) may be white box to enable the plant operation support system's suggestions are provided based on an explainable decision-finding.

Contrary to that, the solution of employing a neural network or model predictive control for analyzing the futures of the plant states is not possible, as they especially at least lack the in depth explainable and understandable structure of decision making, or the assurance that a same problem will also lead to a same proposed solution.

According to the present disclosure, the benefit score may be a metric used for ranking the outcome of a potential adjustment action of possible futures in a comparable way. The likelihood score may be a metric for ranking the outcome of a potential fault source of possible futures in a comparable way.
According to the present disclosure, the corresponding potential adjustment action can refer to the potential adjustment action(s) that can e.g., improve future operation efficiency, or avoid an alarm that would come up if no actions is taken. Upon ranking the adjustment actions based on the benefit score of the corresponding potential adjustment action, one can also filter or propose actions with beneficial outcome in dependency of their urgency of application or present an order of to be taken actions.

According to the present disclosure, the corresponding proposed fault source can refer to the proposed fault source (also multiple fault sources could be possible) that are impacting the plant operation e.g., react to alarms/unexpected plant behavior. Upon ranking the fault sources based on the likelihood score of the corresponding potential fault sources, one can also filter or propose fault sources that are most likely to cause unexpected behavior or an alarm. The detection of unexpected behavior poses a tradeoff between ignoring divergent behavior and detecting the signs that are caused by the presence of an actual error in the plant, such as a broken valve. E.g., a threshold can be employed. If the divergent behavior is below this threshold, no error is suspected and if the threshold is met, an error is expected. Of course, it is also possible that an error is present, but the deviation is lying below the threshold. However, by adjusting the threshold in a way that at least error would show once they reach a significant impact on plant operation, normal plant operation can be ensured. The recognition of a problem may refer to different aspects. E.g. beyond normal operation, the actual plant could either have problem with a component that is not acting as it should (e.g. valve is stuck), but it could also be that the component is working, but a sensor of the component is faulty, transmitting a wrong component state of operation (e.g. valve is open, sensor says valve is closed).

According to the present disclosure, the corresponding potential adjustment action can also refer to an order of the potential adjustment actions.

According to the present disclosure, an alarm could be issued when a condition is met (e.g. a predefined condition or threshold that is critical to the plant's operation, such as reaching a certain temperature, pressure, or failure point).

According to the present disclosure, simulating different possible futures of a plant state, which may include, may involve for each possible future of a plant state, applying one set of potential adjustment actions and/or potential fault sources to the initial simulation plant state. A set of potential adjustment actions to the initial simulation plant state and/or a set of potential fault source to the initial simulation plant state can contain multiple adjustment actions/fault sources that are addressed, but also an approach that only considers a single adjustment action/fault source is possible. A further option lies also in employing an "empty" set, which would simply translate to waiting and observing if the next simulation state changes (and if so, is it improving or worsening).

This is especially interesting as, if the simulation time (this aspect will be discussed further detailed below, esp. in the context of the next aspect) allows to also simulate the future of a simulated future. Hence, the simulation of possible futures in a recursive manner (within the simulation time constraint). This method may enhance the predictive capabilities of the simulation by incorporating a variety of scenarios that could impact the plant's future state.

By applying potential adjustment actions, the simulation can evaluate how different interventions might influence the plant's performance, thereby providing valuable insights into the most effective strategies for maintaining optimal operation. Similarly, by introducing potential fault sources, the simulation can assess the plant's resilience to various types of failures and identify vulnerabilities that need to be addressed. This approach allows for a more comprehensive analysis of the plant's future states, considering both proactive measures and reactive responses.

The aspect of applying potential adjustment actions and/or potential fault sources to the initial simulation plant state brings a dynamic and multifaceted dimension to the simulation process. It enables the simulation to not only predict future states based on current conditions but also to explore the effects of different variables that could alter those states. This is particularly useful in complex systems where multiple factors can interact in unpredictable ways.

By simulating a range of possible futures, the method provides a robust framework for decision-making, allowing for a broader range of potential outcomes to be analysed. This aspect significantly enhances the method's ability to simulate and analyse different possible futures of a plant state, providing valuable insights and supporting informed decision-making.

According to the present disclosure, different possible futures of a plant state may be simulated for a fixed simulation time and/or until a significant event happens according to simulation. The simulation system can predict various potential future states of the plant over a predetermined period or until a notable event occurs within the simulation framework.

This aspect allows for a dynamic and responsive simulation process that can adapt to changes and significant events as they happen.

The aspect allows for an added layer of flexibility and precision to the simulation process. By allowing the simulation to run for a fixed time or until a significant event, the simulation time can be stretched to arrive at more meaningful suggestions by simulating more potential futures, as it might be also possible to simulate the future of a future (and so forth) if the simulation time compared to the complexity of the simulation (needed simulation time for a single future prediction) allows for a recursive approach. The simulation time can be fixed predetermined time. Optionally, for certain application where the typical rate at which processes are happening in a plant is not very steady, the simulation time could also be adapted to match a current rate at which processes are happening in the plant. A plant with a steady rate could be the production in a cement plant, whereas non-steady rate can be expected in a load-following power plant.

According to the present disclosure, a significant event could be an alarm that would occur in simulation and/or a threshold for parameters that would define arriving at an undesirable outcome. At the same time, the simulation for those futures that would arrive at a significant event can be halted to prevent the waste of simulation resources on predicting the future of undesirable futures. Another significant event, as a criterion for stopping and re-evaluating the simulation, could be that the deviation between simulated plant state and actual plant state has exceeded a threshold. When the simulation time is over or a significant even occurred, the simulation starts over again by starting from a new initial plant state. This enables the detection of anomalies in actual plant operation, and further optionally allows the start of a root cause analysis to employ the simulation to determine the reason for the alarm. This allows for a more event-driven approach by stopping simulation, as the method can provide more accurate and relevant predictions about the plant state.

Overall, the aspect enhances the method by introducing a dual criterion for simulation duration, thereby increasing the robustness of the simulation results and maintaining flexibility and situation-awareness of the simulation.

According to the present disclosure, the method may involve scoring the possible futures of a plant state to obtain the benefit score of the corresponding potential adjustment action based on at least one improvement objective.

According to the present disclosure, a higher benefit score of the corresponding potential adjustment action represents a greater impact of the adjustment action for meeting the set target in the simulated future of a plant state compared to the initial simulation plant state. Hence, a higher benefit score illustrates that a certain potential adjustment action is more beneficial compared to another potential adjustment action. Concludingly, a lower benefit score also illustrates that a potential adjustment action is less beneficial.

This introduces an aspect that enhances the method by incorporating specific goals or targets into the evaluation process, and further enables efficient ranking of different actions in dependence of their impact on plant operation. The improvement objectives could include various criteria such as increasing yield, reducing resource consumption, improving plant health, reducing emissions, accelerating chemical reactions, or optimizing growth conditions. At least one improvement objective or target has to be set, but also multiple criteria could be set, and optionally prioritization among those objectives could be selected. Improvement objectives can be set as an objective of operation, e.g. increased efficiency, or reduced emissions, but they can also contain hard criteria, such as a target value e.g. set the production output of 600 goods per hour, or a threshold, such as use a maximum of 40kg/hour of educt B. Those thresholds can be set by a user, e.g. operator, or by the system itself, e.g. when identifying that a reaction's speed, triggered by a pressure above a certain level, would lead to a temperature rise above a safety threshold (alarm criterion) after 30 mins. By integrating these objectives, the method becomes more tailored and focused on achieving desired outcomes, making it more efficient and effective in guiding decision-making processes.

This aspect allows for a more nuanced and goal-oriented approach to scoring potential adjustment actions, ensuring that the actions taken are aligned with the overall objectives of the plant management strategy. Consequently, this leads to more informed and strategic adjustments, potentially resulting in better performance and outcomes for the plant.

The inclusion of improvement objectives in the scoring process adds a layer of specificity and direction, which can significantly enhance the utility and effectiveness of the method.

According to the present disclosure, the method may further introduce a method that may further comprise detecting unexpected plant behaviour by comparing a deviation between a current simulation plant state and an actual plant state, wherein the actual plant state may be provided by one or more sensors of the plant.

This aspect may be seen a mechanism for identifying discrepancies between the simulated model of the plant's operations and the real-time data collected from the plant itself.

The sensors may contribute to this process by continuously monitoring various parameters of the plant and supplying real-time data that reflects the actual state of the plant. Sensors could gather information on temperatures, flow, yield, or substance concentrations.

The method may involve a comparison process where the current state of the plant, as predicted by the simulation, is juxtaposed with the actual state as reported by the sensors. Any significant deviation between these two states is indicative of unexpected behaviour within the plant. An unexpected behaviour could be an alarm, and alternatively or in addition, a flow that is lower than expected according to simulation or a lower output. This aspect may enhance the robustness of the plant monitoring system by providing means to detect anomalies that may not be apparent through the simulation alone.

The integration of sensor data can ensure that the monitoring system has access to accurate and up-to-date information about the plant's condition, thereby improving the reliability of the detection process.

By identifying deviations between the simulated and actual states, the method can try to identify the source of the unexpected plant behaviour. This allows for initiating corrective actions to address any issues that arise, thereby maintaining the optimal performance and safety of the plant. This approach leverages the strengths of both simulation and real-time monitoring, combining predictive modelling with empirical data to create a comprehensive system for detecting and responding to unexpected plant behaviour.

The aspect allows the ability to detect unexpected plant behaviour through a systematic comparison of simulated and actual plant states, thereby enhancing the overall effectiveness and reliability of the plant's monitoring and control systems.

According to the present disclosure, the scoring of the possible futures of a plant state to obtain the likelihood score of the corresponding potential fault source may be based on a predicted likelihood that the fault source causes and/or contributes to the alarm and/or the unexpected plant behaviour, wherein the predicted likelihood may be based on a deviation between the respective simulated possible future of a plant state and the actual plant state.

The aspect allows for incorporating a predictive likelihood model that assesses the probability of a fault source causing or contributing to alarms or unexpected behaviours within the plant. This predictive likelihood is determined by comparing the deviation between simulated possible futures of the plant state and the actual plant state.

The actual plant state which can be determined based on the measurements of sensors or can be derived from the presented sensor information in combination with the knowledge about the fundamental operation processes of the (actual) plant.

The deviation can be recognised by computing a fault score as the sum of the absolute differences between actual plant values (actual plant state) and simulated values.

According to the present disclosure, a fault score of zero means that applying the fault to the simulation leads to the simulation behaving like the actual plant again.

The potential fault sources may be scored in dependence of their simulated contribution to a future that matches the real plant state.

According to the present disclosure, a higher likelihood score of the corresponding potential fault source may represent a greater impact of the fault source as, e.g., an absolute difference of the simulated future plant state deviates less from the actual plant state. Hence, a lower fault score results in a higher likelihood score. Thereby, this aspect can provide a more accurate and dynamic assessment of potential fault sources.

This approach enhances the method by allowing for a more nuanced and data-driven evaluation and detection of fault sources, which may lead to more effective identification and mitigation of potential issues within the plant. By incorporating this predictive likelihood based on deviations, the method may improve its ability to anticipate and respond to faults in a correct way, thereby increasing the overall reliability and efficiency of the plant's operations. This aspect may also facilitate more proactive maintenance and troubleshooting, as it provides a clearer understanding of how potential faults may evolve and impact the plant's performance.

According to the present disclosure, in response to the alarm and/or the unexpected plant behaviour of the plant, determining whether any of the simulated possible futures of a plant state matches with the actual plant state. In particular, this may happen in response to determining that a deviation between a current simulation plant state and an actual plant state is increasing. This determining step can for example be performed to employ mutually different sets of potential fault sources.

The simulated possible future of a plant state that shows the least deviation between simulated possible future of a plant state and actual plant state, may be seen as the possible future that matches with the actual plant state. Optionally, to avoid false-positive identification of a possible future (e.g. by lacking simulation of enough possible futures), an additional maximum deviation value between the potentially matching possible future could be set. Based on this determination of a match between simulated states and the real-world plant state, the method can determine which plant component is most likely to cause the deviation between the initial simulation plant state and the actual plant state.

According to the present disclosure, a plant component could be a sensor, actor, or component comprising at least one sensor and/or actor. Also, actors sharing a state (e.g. internal state of a component) may count as sensor. This is possible, as usually only one or at least only a few plant components of a plant fail at once, thereby causing a deviation between simulation and actual plant state. Using this assumption, the simulation can try to identify the faulty plant component by assessing simulations for different futures employing different sets of potential fault sources, and comparing which of those futures is deviating the least from an actual plant state.

In addition, the simulation might also identify the specific fault of the plant component (of which a component could have multiple). Hence, the aspect enables enhanced diagnostic capabilities that allow for the identification of the most likely faulty plant component or plant components based on the comparison of simulated scenarios with the actual state of the plant. This aspect improves the accuracy and efficiency of fault detection and isolation within the plant by leveraging simulation data to predict and match potential fault sources with real-time plant behaviour. Furthermore, the plant can also identify the specific fault of a component which improves capability to detect faults causing critical consequences. It also enables to identify faults with low consequences on the operation of the plant, such as plant component readings that could be compensated by employing a different non-faulty plant component or by using a non-faulty plant component and applying an approximation to arrive at a result that is still sufficiently accurate to at least momentarily keep the plant in an operative state, for example until the faulty plant component is replaced.

By incorporating this aspect, the method ensures that plant operators can make informed decisions based on a thorough analysis of simulated and actual plant states, ultimately leading to improved operational efficiency and safety, such as a reduced downtime.

According to the present disclosure, the method may further comprise providing operator support upon detecting the unexpected plant behaviour and/or upon detecting that the unexpected plant behaviour meets a support criterion. Optionally, this operator support may be for addressing the unexpected plant behaviour. Further, optionally, this may be addressed even in the absence of an alarm. In particular, the operator support may be provided before an alarm is issued.

The specific mechanisms in this context may involve the detection system and the operator support system. The detection system may identify unexpected plant behaviour or evaluates whether the behaviour meets a predefined support criterion. This can be performed as the simulation is aware of the plant model. Based on this, the method can enable the logging of a recommended chain of associations between the plant components for analysing the plant operation.

Optionally, operator support can particularly be given before an actual alarm would be issued. This is possible by monitoring the plant state in simulations to detect an upcoming potential problem in plant operation and based thereon, recommending applicable counter actions that will eventually prevent that the alarm criteria will actually be met. This is also not only limited to detecting a future upcoming alarm, but also by detecting an unexpected plant behaviour, e.g. a value that is lower than it should be (with the current configuration). Upon such detection, the operator support system is activated to provide assistance to the operator. This assistance could be in the form of guidance, recommendations, or actionable insights to address the unexpected behaviour.

The aspect allows for the proactive provision of operator support before an alarm is triggered. This enhances the responsiveness and effectiveness of the plant's operational management by enabling early intervention, potentially preventing escalation of issues that could lead to alarms. It ensures that operators are equipped with the necessary support to address anomalies promptly, thereby improving overall plant safety and efficiency

This proactive approach contrasts with traditional methods where operator intervention typically occurs only after an alarm has been issued, thus providing a more dynamic and anticipatory operational strategy.

According to the present disclosure, the method may involve providing operator support based on the ranking of the adjustment actions, and optionally, by focusing on the adjustment actions with the highest benefit score of the corresponding potential adjustment action. Additionally or alternatively, the method may involve providing operator support based on the ranking of the fault sources, and according to an optional aspect, concentrating on the fault sources with the highest likelihood score of the corresponding potential fault source. Further optionally or as an alternative to the step of the previous sentence, the method may involve providing operator support based on a proposed fault source, and according to an optional aspect, the potential fault source with the highest likelihood score of the corresponding potential fault source.

According to the present disclosure, a potential fault source could comprise multiple fault sources, which then can be ranked to find the fault sources with the highest likelihood scores, which may be the fault source(s) that is/are most likely to be identified correctly.

This aspect further may refine the method by specifying that the operator support can also be performed based on a proposed fault source, particularly the potential fault source with the highest likelihood score.

The aspect enhances the method by incorporating a ranking system that prioritizes adjustment actions and fault sources according to their respective scores. This prioritization allows for more efficient and effective operator support by directing attention to the most beneficial adjustment actions and the most likely fault sources. By focusing on the highest benefit and likelihood scores, the method ensures that the operator is provided with the most relevant and impactful information, thereby improving the overall decision-making process. Such a process could involve the presentation of the three or five best (highest ranked) options to the operator.

Furthermore, disadvantageous options would naturally be awarded a low score. By using prioritization-based suggestions, it might also be ensured that those disadvantageous options that could potentially even cause severe consequences for plant operation may not be suggested to the operator (hidden from the operator). The inclusion of a proposed fault source with the highest likelihood score may further add to the robustness of the method by considering potential fault sources that are most probable, thereby enabling pre-emptive measures to be taken.

The aspect thus brings a structured and prioritized approach to the operator support, enhancing the efficiency and effectiveness of the method by leveraging the ranking of adjustment actions and fault sources based on their respective scores.

According to the present disclosure, the method may further comprise executing one or more adjustment actions in accordance with the ranking of the adjustment actions. The method may also involve, according to an option, executing the adjustment action with the highest benefit score of the corresponding potential adjustment action. This could optionally also happen automatically after time passed and no action was input by the operator. Additionally, the method may provide a guided human-machine interaction process assisting a user in selecting and/or carrying out the adjustment action.

According to the present disclosure, the guided human-machine interaction process can comprise a detailed illustration of the simulated future plant states for the highest ranked benefit score and/or likelihood score. The user can especially be a plant operator or supervisor, wherein in particular the supervisor might be responsible for multiple plants at the same time. The user might not be working on-site of the plant but could also be connected to the plant controls via a remote service.

This aspect introduces a guided human-machine interaction process that assists users in selecting and implementing the adjustment actions, by providing support and guidance, thereby reducing the likelihood of user error, and improving the overall effectiveness of the adjustment process.

Optionally, the aspect involves the automatic execution of the highest-ranked adjustment action after a predetermined period of inactivity of the user and the provision of a guided interaction process for the user. A period of inactivity could be that a preset waiting time passed without the operator taking any action. This could be especially interesting for minor problems occur or minor adjustment actions have to be taken. Another application could be directed to the application in plants without specialized on-site operators, but operators being connected remotely to make decisions. In case of a failure of such a connection, upcoming problem solutions or adjustment requirements could at least be taken if such a connection to a skilled operator would fail. Optionally, the assistance of a user could be employed as a computer-controlled system that is only adapted to be monitored by a human supervisor.

This approach ensures that the system remains responsive and adaptive, either by autonomously making adjustments when necessary or by facilitating user involvement through an interactive process. The automatic execution aspect ensures timely adjustments, which can be critical in dynamic environments where delays could lead to suboptimal performance or other issues. Meanwhile, the guided interaction process empowers users by providing them with the necessary information and support to make informed decisions, thereby enhancing the overall usability and reliability of the system. Moreover, certain decisions can be taken over by the system and the system is only monitorable by a supervisor.

This combination of automatic and guided processes represents a significant improvement over methods that rely solely on one approach, offering a more flexible and robust solution for managing adjustment actions.

According to the present disclosure, the method may further optionally comprise determining based on the plant model a number of potential adjustment actions. The method may also involve obtaining, for each of the potential adjustment actions or a subset thereof, and according to an optional aspect, this is performed for each plant component associated with the potential adjustment actions or subset thereof, a respective plant model clone by cloning the plant model, optionally also each time per potential adjustment action. By means of plant model clones, the method may include simulating possible futures of a plant state based on mutually different sets of potential adjustment actions, and scoring a corresponding result of each set of potential adjustment actions. The method may also optionally determine based on the plant model a number of potential fault sources. It may further obtain, for each of the potential fault sources or a subset thereof, and according to an optional aspect, this is performed for each plant component associated with the potential fault sources or subset thereof, a respective plant model clone by cloning the plant model. By means of plant model clones, the method may simulate possible futures of a plant state based on mutually different sets of potential fault sources, and score a corresponding result of each set of the potential fault sources.

According to the present disclosure, the potential adjustment actions and/or potential fault sources can be determined based on the plant model by analysing the number of manipulatable variables.

The term "a subset thereof" refers to the fact that depending on the potential problem that is to be addressed by inspecting the potential fault sources or the desired goal that is to be arrived at by using potential adjustment actions, only certain potential adjustment actions or potential fault sources will be relevant. Some potential adjustment actions or potential fault sources might be neglectable (being unlikely) or not be in a coherent relationship with the desired outcome. Concerning iterative simulation, some potential adjustment actions or potential fault sources may be determined to be unlikely after simulation of one future. Unlikely potential adjustment actions or potential fault sources may be determined by discarding adjustment actions and/or fault sources with a low benefit score or likelihood score. This especially reduces the to-be simulated next futures, thereby reducing computational demands. Consequently, some potential adjustment actions or potential fault sources can sometimes already be ruled out/filtered based on the nature of the desired outcome or the problem at hand. One example could be a linear 3-step process (steps A, B and C), where a problem arises in step B. In this case, any adjustment action for step C can already be neglected. Another example could be given for a glass bottle production, where a longer cooling off time of the completed bottle could be desired to safe water.

The cloning the plant model, may be performed at least once per potential adjustment action and/or potential fault source to simulate each potential adjustment action and/or each potential fault source individually, and optionally even combining multiple potential adjustment actions and/or potential fault sources in a further clone.

The scoring a corresponding result of each set of potential adjustment actions, or respectively the scoring a corresponding result of each set of the potential fault source, is performed to obtain the benefit scores of the corresponding potential adjustment action or the respective likelihood scores of the corresponding potential fault source. This can however not be addressed by any adjustment actions that may relate to the cooking of glass itself, which therefore, could already be ruled out.

The aspect brings a more granular and detailed approach to simulating and evaluating the potential outcomes of various adjustment actions and fault sources. By cloning the plant model for each potential adjustment action or fault source, the method allows for a more precise simulation of possible futures, enabling a better understanding of the impact of different actions or faults on the plant state. This approach enhances the ability to predict and mitigate potential issues by providing a mechanism to score and compare the results of different scenarios.

The method's ability to simulate and score different sets of potential adjustment actions and fault sources provides a robust framework for optimizing plant operations and improving fault detection and resolution. This level of detailed simulation and evaluation is critical for making informed decisions that can enhance the efficiency and reliability of the plant.

According to the present disclosure, the method may involve the plant model being a mixed fidelity model, wherein the mixed fidelity model may be a model in which individual plant components are simulated at different fidelity levels. This may include, in accordance with an option, that this is performed for a low fidelity simulation, such as at the lowest possible fidelity level, or at a fidelity level below an upper threshold fidelity level. Additionally, it may include a high-fidelity simulation, such as at a fidelity level exceeding a predetermined lower threshold fidelity level. In accordance with an option, the respective fidelity level for the plant components may be determined in accordance with its time criticality and/or impact on the plant state. Furthermore optionally, a high-fidelity simulation may be used to verify the most promising candidate adjustment actions and/or fault sources, and optionally, to adjust the corresponding benefit and/or likelihood scores. This aspect increases the confidence in the computed scores and thus the suggested adjustment action and/or fault source. This can be employed by a software application for automatically creating the plant model, and optional by further integrating this plant model into a plant engineering tool for enabling automatic updating of the model. Optionally, certain plant design tools might already support all or at least most relevant information that is needed to arrive at a plant model modelling plant operation of a plant.

The lowest possible fidelity level refers to a level that is not overly simplified so that it still allows to produce meaningful predictions of the plant components' impact on the plant state.

The introduction of mixed fidelity modelling allows for a more efficient and targeted simulation process, where computational resources are allocated based on the criticality and impact of each component. This approach ensures that high-fidelity simulations are reserved for the most critical components or scenarios, thereby optimizing the overall simulation process.

The ability to verify candidate actions and fault sources using high-fidelity simulations enhances the accuracy and reliability of the predictions and adjustments made by the model. By adjusting benefit and likelihood scores based on high-fidelity verification, the model can provide more precise and explainable insights for plant operation and maintenance. This aspect brings a significant improvement in the way plant simulations are conducted, offering a balanced approach that leverages both low and high-fidelity simulations to achieve optimal performance and accuracy. This approach allows to have meaningful results, but to require low computational power, therefore still allowing to simulate multiple futures at the same time and especially providing the results in due time.

The due time criterium is naturally highly depending on the rate at which processes are happening in the plant. As a rule of thumb, slow actions (e.g. fermentation or baking) allow for longer simulation times than quick actions (e.g. a punching process or etching reaction). The mixed fidelity model thus represents a sophisticated method for managing the complexity of plant simulations, ensuring that critical components are simulated with the highest possible accuracy while less critical components are simulated more efficiently. Critical in this context would especially refer to the relevance for a correct production flow but also for the rate at which the component is altering its parameter.

This results in a more effective and resource-efficient simulation process, ultimately leading to better decision-making and improved plant performance.

The subject matter describes a system that includes a processing system to execute the method detailed in any one of the preceding aspects. Here, the term "system" refers to a set of components that work together to perform specific functions. The "processing system" is a computational unit or set of units capable of executing programmed instructions to carry out tasks. In this context, it is configured to execute the method described in the before mentioned aspects, which may involve predicting future plant states, evaluating potential operator actions, and providing decision support to plant operators.

The subject matter described involves a computer-readable medium that contains instructions. When these instructions are executed by a computer, they prompt the computer to perform the method detailed in any one of the preceding aspects. In this context, a "computer-readable medium" refers to any data storage device that can store digital information, such as a hard drive, CD, USB drive, or cloud storage. The "instructions" are coded commands that the computer can understand and execute to perform specific tasks.

The subject matter described is a computer program product that includes instructions which, when executed by a computer, enable the computer to perform a method as outlined in any one of previous aspects. In this context, a computer program product refers to a software application or set of instructions designed to be executed by a computer. When these instructions are executed, they cause the computer to perform the method described in the earlier aspects, which may involve supporting plant operation by simulating future scenarios to predict alarms, suggest corrective actions, and identify root causes of faults.

### BRIEF DESCRIPTION OF THE DRAWINGS

In the accompanying drawings,
figure 1 illustrates a schematic representation of an exemplary system;
figure 2 is a flowchart illustrating a simplified example helpful for understanding a method according to the present disclosure; and
figure 3 is a flowchart illustrating a method according to the present disclosure.

### DETAILED DESCRIPTION

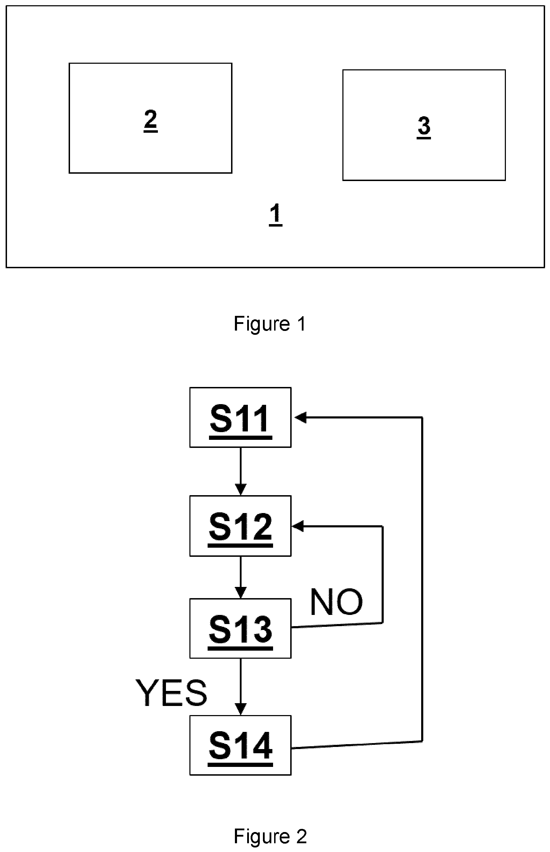

Figure 1 illustrates a system 1 according to the present disclosure, the system being a plant operation support system 1. The plant operation support system 1 comprises a plant model 2, a computing system 3, or any other suitable system. The plant model 2 may be created using a Plant Engineering Tool.

A processing system may be enabled to obtain a plant model that models the operation of a plant; simulate, by means of the plant model, different possible futures of a plant state at a time starting from an initial simulation plant state at an initial time, where each possible future of a plant state corresponds to an adjustment action among a plurality of potential adjustment actions and/or a fault source among a plurality of potential fault sources associated with an alarm and/or an unexpected plant behaviour; analyse and score, by means of an exploratory method, the possible futures of a plant state to obtain, for the possible futures of a plant state, a respective benefit score of the corresponding potential adjustment action and/or a respective likelihood score of the corresponding potential fault source; and determine at least one of the following: one or more proposed adjustment actions among the plurality of potential adjustment actions based on the benefit score of the corresponding potential adjustment action; a ranking of adjustment actions among the plurality of potential adjustment actions in terms of their outcome based on the benefit score of the corresponding potential adjustment action; a proposed fault source among the plurality of potential fault sources, wherein the proposed fault source is predicted to be a root-cause of and/or to contribute to the alarm and/or the unexpected plant behaviour based on the likelihood score of the corresponding potential fault source; a ranking of fault sources among the plurality of potential fault sources in terms of their outcome based on the likelihood score of the corresponding potential fault source.

Figure 2 is a flowchart illustrating a simplified version of the method helpful for understanding the present disclosure. It does however not fully cover the method of the present disclosure, as figure 2 is only illustrating the adjustment actions approach. Furthermore, figure 2 is also illustrating optional aspects.

The steps for the simplified operator support method are as follows:
In step S11, a new instance of the plant model is created and the plant model instance with the current state of the real plant (e.g., current level of a vessel, current temperature of a heater, whether valves are open or closed, etc.) is initialized.
In step S12, all operator actions that are possible given the current state of the plant (e.g., if a valve is currently closed, a possible action would be to open it) are determined.
In step S13, for every possible operator action the following is performed:
   a) Clone the previous simulation model instance and apply the respective operator action;
   b) Progress the simulation until a significant event occurs in the simulation or enough simulation time has passed;
   c) Score the simulated future;
   d) If no significant event (e.g., an alarm) occurred in the real plant, and(/or) the (predefined) simulation time is not over, go to Step 12 and recurse.

And if until a significant event (e.g., an alarm) occurred in the real plant, or(/and) the simulation time passed, perform step S14, of suggesting the highest ranked adjustment actions to the operator, and go to Step S11.

For the root-cause detection capability of divergent behaviour, the same method of Figure 2 could be used, but instead of simulating the effects of all possible operator actions, the effects of all possible faults are simulated, and scored based on the lowest differences between real values and simulated values.

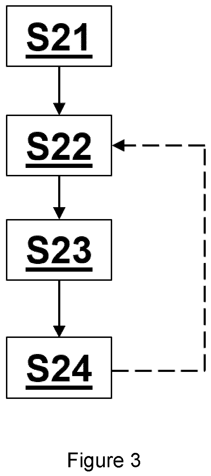

Figure 3 is a flowchart illustrating a method according to the present disclosure.

The method comprises:
Step S21 of obtaining a plant model 2, wherein the plant model comprises information on the plant operation.
Step S22 of simulating, employing the means of the plant model 2, different possible futures of an operational plant state. The simulation starts with an initial plant state at an initial time, and simulates at least one future state of the plant corresponding to different potential adjustment actions that could be taken (what would change if one would e.g. open valve A, or close valve B, or drain tank T) and/or corresponding to a different fault source that could be involved or a cause for an alarm or an unexpected behaviour of the plant (would e.g. a faulty valve A that stayed open instead of its intended close position have led to a certain problem/alarm?).
Step S23 of analysing and scoring, by means of employing an exploratory method, the previously simulated possible futures of a plant state. The possible futures of a plant state simulated by employing a potential adjustment action a benefit score is used for the ranking. The possible futures of a plant state simulated by employing a potential fault source a likelihood score is used for the ranking.
Step S24 of determining at least one of:
   one or more proposed adjustment actions among the plurality of simulated potential adjustment actions. The determination is made on the basis of the benefit score assigned to each corresponding potential adjustment action;
   a ranking of adjustment actions among the plurality of potential adjustment actions based on their outcome by employing the benefit score assigned to each corresponding potential adjustment action;
   a proposed fault source among the plurality of potential fault sources, wherein the proposed fault source is predicted to be a root-cause of and/or to contribute to the alarm and/or the unexpected plant behaviour. The determination is made on the basis of the likelihood score assigned to each corresponding potential fault source;
   a ranking of fault sources among the plurality of potential fault sources based on their outcome by employing the likelihood score assigned to each corresponding potential fault sources.

In accordance with an optional embodiment, the method may then revert to step S22 and repeat the method steps in a recursive manner. In accordance with a further optional embodiment, this may happen until a simulation time is met and/or an alarm was issued and/or unexpected plant behaviour is detected. Upon considering multiple triggers (simulation time, alarm, unexpected plant behaviour) are considered, only one of the triggers might be met to stop performing the methods steps repeatedly in recursive manner.

It might be necessary that a future of a plant has to be simulated before it can be scored. The simulations for different adjustment actions or different potential fault sources can be performed in parallel, such as the according scoring steps of the different adjustment actions and/or different potential fault sources.

While the invention has been illustrated and described in detail in the drawings and foregoing description, such illustration and description are to be considered exemplary and not restrictive. The invention is not limited to the disclosed embodiments. In view of the foregoing description and drawings it will be evident to a person skilled in the art that various modifications may be made within the scope of the invention, as defined by the claims.

## Claims

1. Computer-implemented method for providing a plant operation support system, the method comprising:
obtaining (S21) a plant model (2) modelling plant operation of a plant;
simulating (S22), by means of the plant model (2), different possible futures of a plant state at a time starting from an initial simulation plant state at an initial time, each possible future of a plant state corresponding to
a) an adjustment action among a plurality of potential adjustment actions and/or
b) a fault source among a plurality of potential fault sources associated with an alarm and/or an unexpected plant behavior;
analyzing and scoring (S23), by means of an exploratory method, the possible futures of a plant state to obtain, for the possible futures of a plant state, a respective benefit score of the corresponding potential adjustment action and/or a respective likelihood score of the corresponding potential fault source; and
determining (S24) at least one of:
one or more proposed adjustment actions among the plurality of potential adjustment actions based on the benefit score of the corresponding potential adjustment action;
a ranking of adjustment actions among the plurality of potential adjustment actions in terms of their outcome based on the benefit score of the corresponding potential adjustment action;
a proposed fault source among the plurality of potential fault sources, wherein the proposed fault source is predicted to be a root-cause of and/or to contribute to the alarm and/or the unexpected plant behavior based on the likelihood score of the corresponding potential fault source;
a ranking of fault sources among the plurality of potential fault sources in terms of their outcome based on the likelihood score of the corresponding potential fault sources.

2. The method according the preceding claim, wherein the simulating different possible futures of a plant state comprises, for each possible future of a plant state, applying one set of potential adjustment actions and/or potential fault source to the initial simulation plant state.

3. The method according to any one of the preceding claims, wherein the different possible futures of a plant state are simulated for a fixed simulation time and/or until a significant event happens according to simulation and/or an alarm is issued by the actual plant.

4. The method according to any one of the preceding claims, wherein the scoring the possible futures of a plant state to obtain the benefit score of the corresponding potential adjustment action is based on at least one improvement objective.

5. The method according to any one of the preceding claims, wherein the method further comprises:
detecting the unexpected plant behavior by comparing a deviation between a current simulation plant state and an actual plant state, wherein the actual plant state is provided by one or more sensors of the plant.

6. The method according to any one of the preceding claims, wherein the scoring the possible futures of a plant state to obtain the likelihood score of the corresponding potential fault source is based on a predicted likelihood that the fault source causes and/or contributes to the alarm and/or the unexpected plant behavior, wherein the predicted likelihood is based on a deviation between the respective simulated possible future of a plant state and a/the actual plant state.

7. The method according to any one of the preceding claims, comprising, in response to the alarm and/or the unexpected plant behavior of the actual plant, in particular in response to determining that a/the deviation between a/the current simulation plant state and a/the actual plant state is increasing, determining whether any of the simulated possible futures of a plant state, in particular based on mutually different sets of potential fault sources, matches with the actual plant state, and, based thereon, determining which plant component is most likely to cause the deviation between the initial simulation plant state and the actual plant state.

8. The method according to any one of the preceding claims, wherein the method further comprises:
upon detecting the unexpected plant behavior and/or upon detecting that the unexpected plant behavior meets a support criterion, providing operator support, particularly operator support for addressing the unexpected plant behavior, in particular even in absence of an alarm, and in particular before an alarm is issued.

9. The method according to claim 8,
wherein the providing operator support is performed based on the ranking of the adjustment actions, in particular based on the adjustment actions with highest benefit score of the corresponding potential adjustment action, and/or
the providing operator support is performed based on the ranking of the fault sources, in particular based on the fault sources with highest likelihood score of the corresponding potential fault source.

10. The method according to any one of the preceding claims, wherein the method further comprises:
executing one or more adjustment actions in accordance with the ranking of the adjustment actions, in particular executing the adjustment action with the highest benefit score of the corresponding potential adjustment action and/or providing a guided human-machine interaction process assisting a user in selecting and/or carrying out the adjustment action.

11. The method according to any one of the preceding claims, wherein the method further comprises:
obtaining, for each of the potential adjustment actions or a subset thereof, in particular for each plant component associated with the potential adjustment actions or subset thereof, a respective plant model clone by cloning the plant model (2);
by means of plant model clones, simulating possible futures of a plant state based on mutually different sets of potential adjustment actions,
and
scoring a corresponding result of each set of potential adjustment actions;
and/or
obtaining, for each of the potential fault sources or a subset thereof, in particular for each plant component associated with the potential fault sources or subset thereof, a respective plant model clone by cloning the plant model (2);
by means of plant model clones, simulating possible futures of a plant state, based on mutually different sets of potential fault sources; and
scoring a corresponding result of each set of the potential fault source.

12. The method according to any one of the preceding claims,
wherein the plant model (2) is a mixed fidelity model, wherein the mixed fidelity model is a model in which individual plant components are simulated at different fidelity levels, in particular comprising a low fidelity simulation, such as at lowest possible fidelity level or at a fidelity level below an upper threshold fidelity level, and a high fidelity simulation, such as at a fidelity level exceeding a predetermined lower threshold fidelity level,
in particular, wherein the respective fidelity level for the plant components is determined in accordance with its time criticality and/or impact for the plant state, and/or
wherein a high-fidelity simulation is used to verify most promising candidate adjustment actions and/or fault sources and optionally to adjust the corresponding benefit and/or likelihood scores.

13. A system comprising a processing system (3) configured to carry out the method of any one of claims 1 to 12.

14. A computer-readable medium comprising instructions which, when executed by a computer, cause the computer to carry out the method of any one of claims 1 to 12.

15. A computer program product comprising instructions which, when the program is executed by a computer, cause the computer to carry out the method of any one of claims 1 to 12.
